# EUROPEAN PATENT SPECIFICATION

(11) **EP 2 698 244 B1**
(45) Date of publication and mention of the grant of the patent: **18.03.2015**
(21) Application number: 13180170.6
(22) Date of filing: 13.08.2013
(51) Int. Cl.: B29D 30/24

(54) **Sleeveless tire building drum with interchangeable width elements**
Manschettenlose Reifenbautrommel mit auswechselbaren Breitenelementen
Tambour sans manchon avec éléments de largeurs interchangeables pour la fabrication d'un pneumatique

(30) Priority: 15.08.2012 US 201261683242 P; 22.02.2013 US 201313774118
(43) Date of publication of application: 19.02.2014
(73) Proprietor: The Goodyear Tire & Rubber Company, Akron, Ohio 44316 (US)
(72) Inventor: Weaver, Douglas Raymond, Uniontown, OH Ohio 44685 (US); Lundell, Dennis Alan, Akron, OH Ohio 44313 (US)
(74) Representative: Kutsch, Bernd

(56) References cited:
- EP-A1- 2 072 240
- WO-A1-2010/103393
- DE-B1- 1 579 183
- US-A- 3 207 648
- US-A- 4 855 008
- US-A- 6 012 500

## Description

### Field of the Invention

The invention relates to a tire building drum, more particularly to a tire building drum with no center sleeve.

### Background of the Invention

The manufacture of tires typically involves a tire building drum wherein numerous tire components are applied to the drum in sequence, forming a cylindrical shaped tire carcass. This stage of the tire building process is commonly referred to as the "first stage" of the tire building process. The tire carcass is then typically removed from the tire building drum and sent to a second stage, expandable tire shaping drum where the carcass is expanded into a toroidal shape for receipt of the remaining components of the tire such as the belt package and a rubber tread. The completed toroidally shape unvulcanized tire carcass or green tire is then removed from the second stage drum and subsequently molded and vulcanized into a finished tire.

The prior art process thus requires two tire building drums and the transfer of the carcass from one drum to the other. Further, a problem often arises in precisely locating and anchoring the tire beads on the unvulcanized tire carcass, especially during the transportation of the tire beads from the first stage drum to the second stage drum. Variations in bead positioning can result in ply distortion in the tire.

Tire manufacturers have recently begun moving towards the utilization of a single tire building drum, for both the first and second stage tire building. This requires that the tire building drum be capable of axial expansion and contraction as well as radial expansion/contraction. Further, it is important to maintain a positive bead lock during the entire tire building process, including the tire shaping, so that the ply cord length is maintained, resulting in good tire uniformity.

Tire manufacturers typically use a flexible cylindrical rubberized center sleeve as the outermost element on tire building drums. The center sleeve functions as the surface of application and point of fixation for the innermost component of the tire (innerliner). The section where the center sleeve wraps around the "shoulder" of the radially expansible segments also serves as a pneumatic seal against the bead area of the green tire, enabling inflation (shaping) of the green tire in the full-stage tire building process. The center sleeve also typically has a series of holes for providing a vacuum to secure the innerliner to the drum and the air to shape the green tire.

Both documents EP 2072240 - A and US 4855008 - A disclose sleeveless tire building drums comprising a center section and a first and second shoulder section, said center section being radially expandable, said center section having no center sleeve, said center section having a first and second end, wherein the first and second end each have a shoulder.

No shoulder seal is disclosed in these documents.

A tire building drum not having radially expandable segments, not having a cylindrical rubberized center sleeve, and having two bead lock assemblies each provided with a sealing sleeve is disclosed in document US 6012500 - A.

Document US 3207648 - A discloses a building drum comprising radially expandable segments, the segments being urged radially inwardly by endless elastic clamping means (106, 108) positioned in the shoulder areas of the segments.

Both documents DE 1579183 - B and WO 2010/103393 - A disclose sleeveless tire building drums comprising a center section, and a first and second shoulder,said center section being radially expandable, said center section having no center sleeve, said center section having a first and second end, wherein the first and second end each have a shoulder, the center further comprising a first and second shoulder seal, each seal having a first end received in a clamp.

There are several disadvantages to the prior art rubber center sleeves. The tire building drums typically have a wide range of width adjustability, while the prior art rubber center sleeves have a very limited range of width operation, typically less than 30 mm. Thus the sleeve limits the action of the tire building drum, resulting in the need to change out the drum with another drum having a different width centersleeve in place. The necessity of changing out of the drum requires the storage of drums for different width sizes, and the loss in productivity during the drum change outs.

A second disadvantage to the prior art center sleeves is that during the tire building cycle the drum width is progressively reduced as the shaped diameter of the green tire increases. This reduced width action may result in the bunching up or buckling of the sleeve due to compression. As the buckled diameter is larger than the bead diameter of the tire, it is necessary to widen the width of the tire building drum in order to remove the finished tire from the drum.

A third disadvantage to the prior art center sleeves is that they are the highest maintenance component on the tire building drum, requiring frequent replacement when they become torn or blistered.

A fourth disadvantage to the prior art center sleeves is that the use of the sleeve results in an increased amount of force required to expand the drum.

A fifth disadvantage to the prior art center sleeves is that the use of the sleeve can result in uneven air flow distribution during inflation of the carcass, contributing to tire nonuniformity.

Thus it is desired to provide a tire building drum that overcomes the above described disadvantages.

The present invention provides a tire building drum as defined in claim 1. Preferred embodiments of the invention are defined in the dependent claims.

### Definitions

"Axial" and "axially" means the lines or directions that are parallel or aligned with the longitudinal axis of rotation of the tire building drum.

"Circumferential" means lines or directions extending along the perimeter of the surface of the annular tread perpendicular to the axial direction.

"Radial" and "radially" mean directions radially toward or away from the axis of rotation of the tire building drum.

### Brief Description of the Drawings

The invention will be described by way of example and with reference to the accompanying drawings in which:
Figure 1A is a perspective view of a tire building drum of the present invention shown having two shoulder sleeves mounted on the crown portion of the drum;
Figure 1B is a perspective view of the tire building drum of Figure 1 a shown with the outer covering of the left and right hand side of the drums removed.
Figure 2 is a front cross-sectional view of the tire building drum of Figure 1 shown in the radially expanded position;
Figure 3 is a close-up view of the center section of the tire building drum of Figure 1;
Figure 4 is a perspective view of the center section only shown in the radially expanded position;
Figure 5 is a perspective view of a single center section segment;

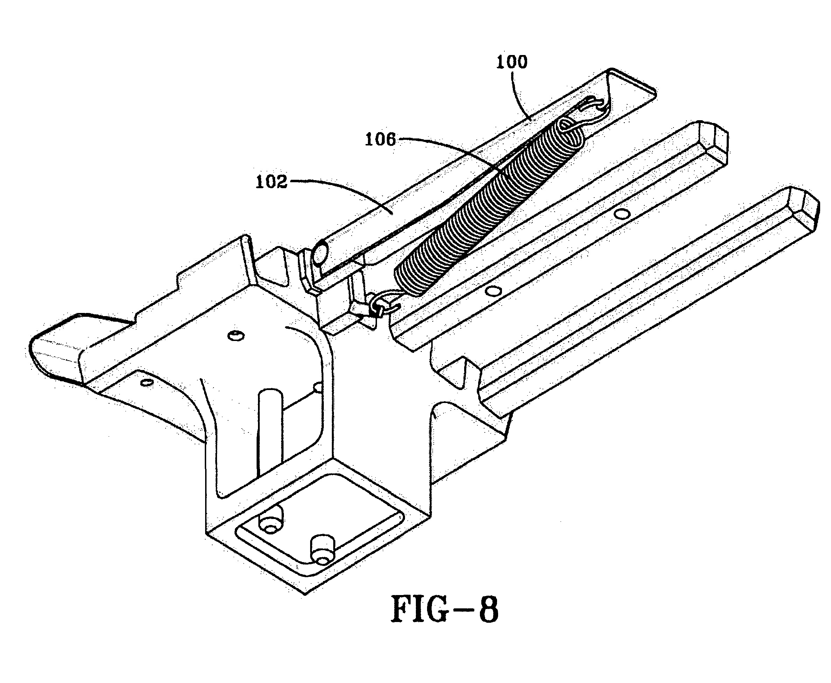

Figure 6 is a bottom view of the single center section segment of Fig. 8;
Figure 7 is a perspective view of a single center section segment having a splice plate;
Figure 8 is a bottom view of the single center section segment of Fig. 7 illustrating the bottom spring; and
Figure 9 is close up view of a portion of the center section showing the splice bar.

### Detailed Description of the Invention

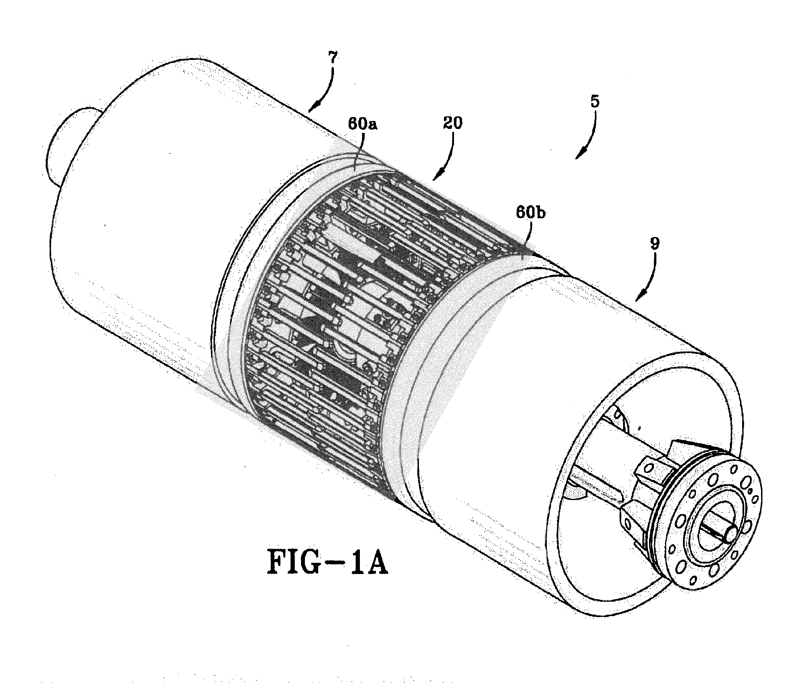

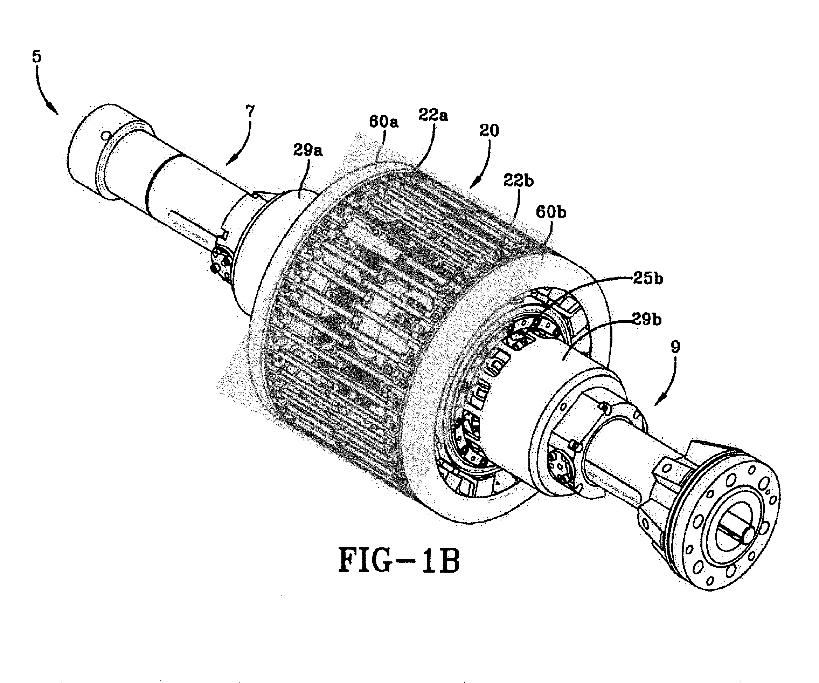

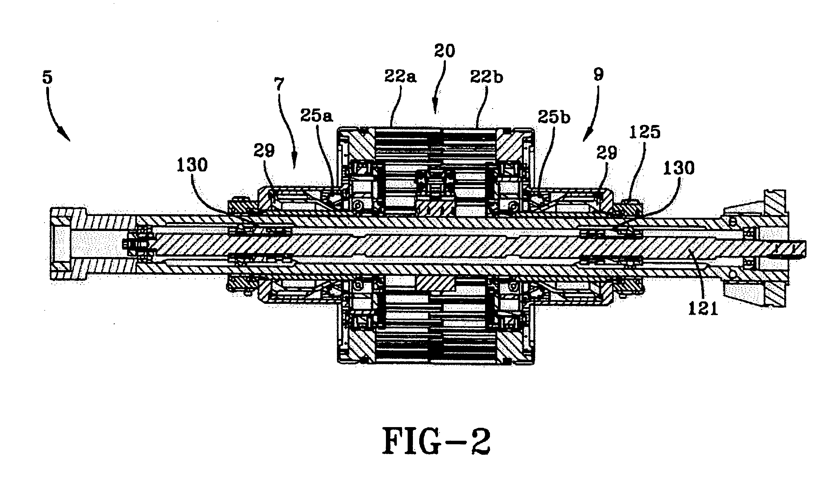

With reference to the Figures, an exemplary tire building drum 5 of the present invention is illustrated. As shown more particularly in Figures 1A and 1B, the tire building drum 5 has a left hand side 7 and a right hand side 9 joined together by a center section 20. The center section 20 is further divided into a right hand side 22b and a left hand side 22a, which are both axially and radially movable, as described in more detail, below. Adjacent the center section 20 are first and second bead locking mechanisms 25a, 25b, which are also radially movable as shown in Figure 2. Adjacent the bead locking mechanisms are first and second shoulder sections 29. Both the bead locking mechanisms and the shoulder sections are axially movable and are driven by the center screw mechanism 121. Thus, both the left hand side and the right hand side of the drum are axially movable. These components are described in more detail, below.

### Center Section

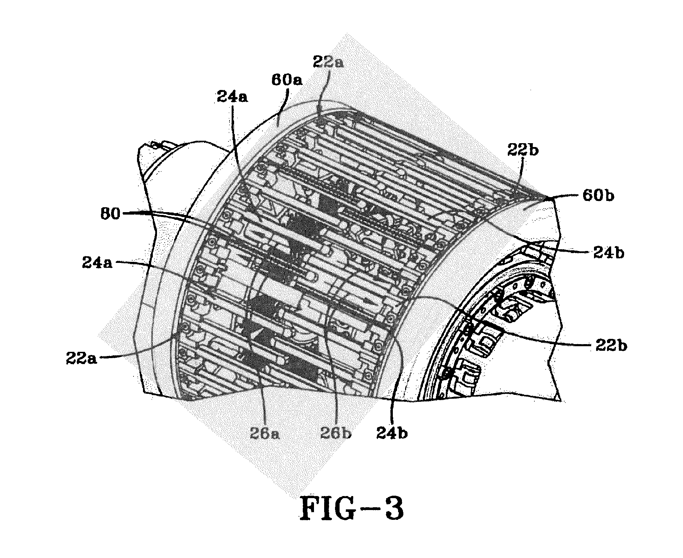

The center section 20 of the tire building drum, as shown in Figures 1-5, further comprises a plurality of center segments 22a, 22b located about the outer circumference of the drum. Each of the center segments may be further split into a left hand side 22a and a right hand side 22b, although not required. As shown in Figure 3, the left hand side center segment 22a has one or more finger like projections or rods 24a, with recesses 26a located between the finger projections. The rods 24a slide in recesses 26b formed between fingers 24b. The right hand side is the mirror opposite. Thus the right hand side center segments 22b has one or more finger like projections or rods 24b that slide in recess 26a which are located between fingers 24a. Each of the finger like projections or rods 24a are received in a respective recess 42a, 42b of mounting block 40a, 40b. Thus the center section left hand side and the right hand side interdigitate or interlock like fingers of a folding hands in order to actuate the center section of the drum 20.

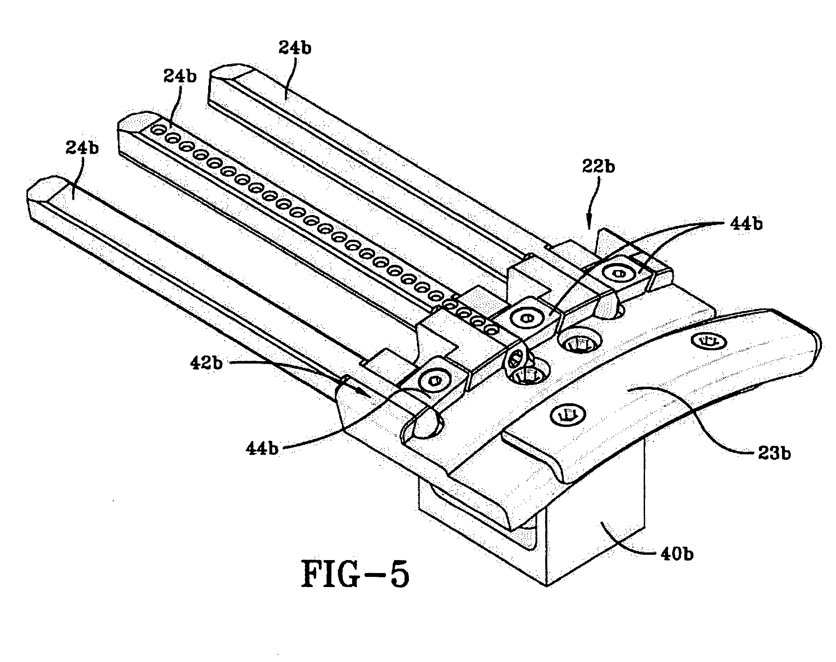

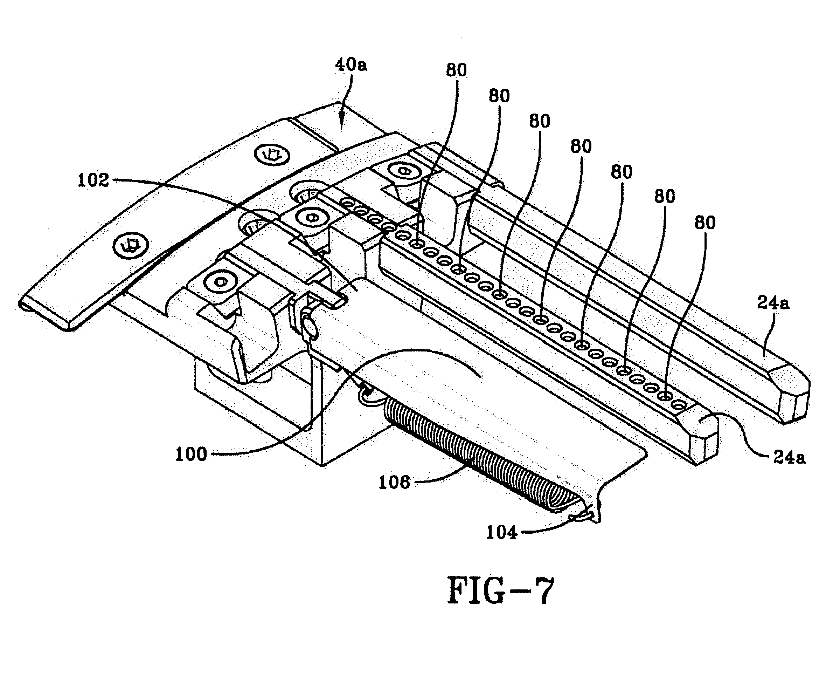

As shown in Figure 5, a right hand center segment 22b is illustrated. The right hand center segment is shown having three finger like projections shaped like a rod 24b. Each rod 24b is received in recesses 42b of a mounting block 40b. The finger like projections 24b are secured within recess 42b of mounting block 40b via clamp 44b. A plurality of the mounting blocks 40a, 40b are arranged on opposite ends in an annular arrangement. The mounting blocks together with the finger like rods form the outer radial surface of the drum. The segments have been redesigned so that the innerliner is applied directly to the outer radial surface of the finger like rods instead of the center sleeve. Thus there is no center sleeve which extends over a portion or all of the outer radial surface of the drum. At least one finger of a segment (see Figure 7) is equipped with holes 80 connected to a vacuum source to enable fixing the leading edge of the innerliner to the drum using vacuum. Preferably, a finger of each of a left segment and a right segment is equipped with the holes 80. The holes 80 may also be used to port air to inflate the tire into a toroid.

In order to have different size center sections, the radial height H of the mounting block may be increased or decreased as desired. The finger like projections having the same dimensions may be used interchangeably with mounting blocks of different radial dimensions in order to form drums of varying diameters. The interchangeability of the finger like projections reduce the amount of parts required to be kept in stock.

As shown in Figure 3, left hand center segment 22a has three finger-like projections 24a which are slidably received in three elongate slots 26b formed between fingers 24b in an interdigitated or interlocked manner. Likewise, right hand center segment 22b has three finger like projections 24b which are slidably received in three opposed elongate slots 26a located between fingers 24a. The center segments 22a, 22b thus cooperate with each other to axially expand or contract as the fingers slide within the recesses.

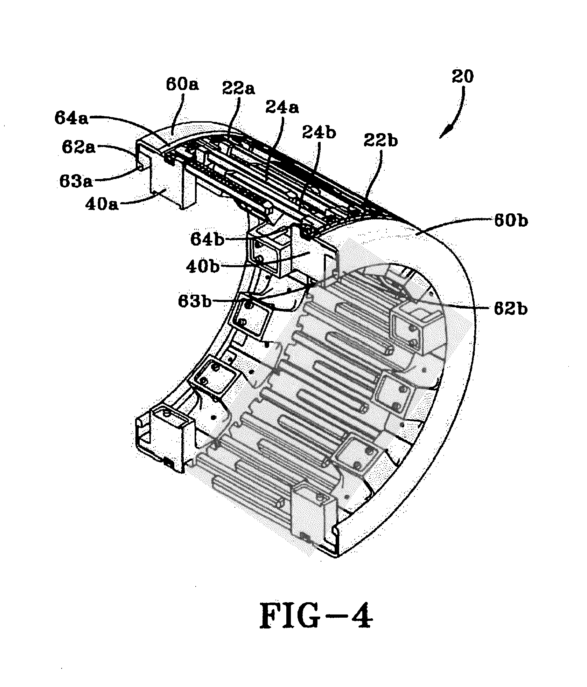

Figure 4 shows the center section in the collapsed position. Figure 2 illustrates the center section 20 in the radially expanded position. The center section 20 can radially expand in the range of 20 to 50 mm for instance. As each center segment 22a, 22b radially expands, the gap between the fingers of the center segments increases.

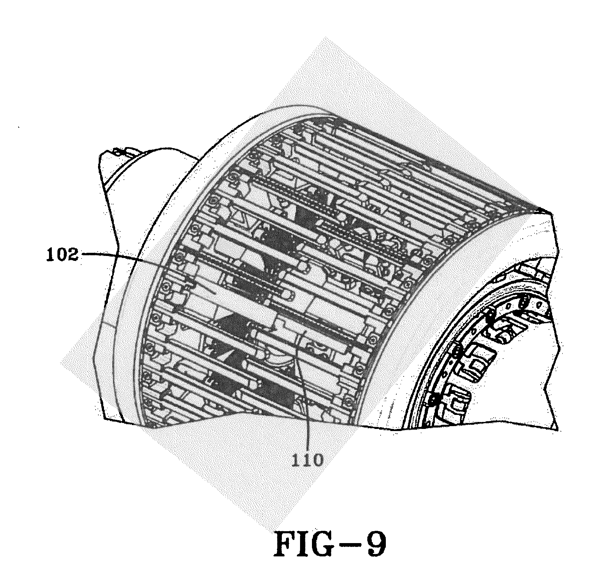

Figure 7 further illustrates an optional feature of the tire building drum. Figure 9 illustrates a resilient splice plate 100. The splice plate has a flat surface for performing a splice. The first end 102 of the splice plate is hinged. The second end 104 of the splice plate is connected to a spring 106. The second end 104 of the splice plate may be in engagement with a stationary splice plate 110 located on the second half of the center section as shown in Figure 9. The stationary splice plate 110 supports the resilient splice plate 100.

### Shoulder Seals

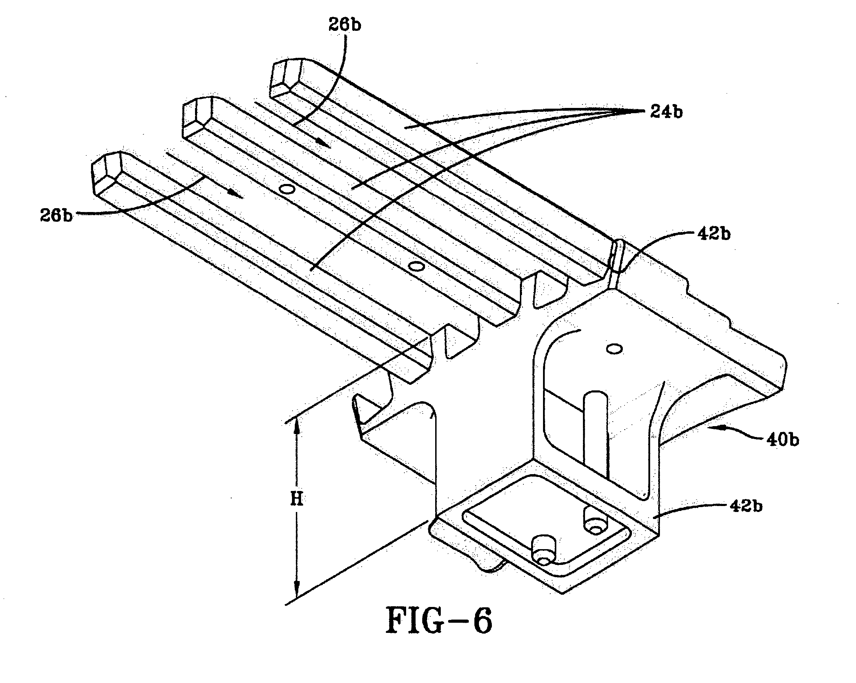

The tire building drum 5 of the present invention does not have a center sleeve, nor a sleeve or any type of rubber component that extends from one end of the center section to the other end, nor a sleeve that is located in the center of the center section of the drum. The tire building drum of the present invention has eliminated the center sleeve, and includes a first and second shoulder seal 60a, 60b. The purpose of the shoulder seals is to maintain the pneumatic seal between the bead of the green tire and the tire building drum, enabling inflation and shaping of the green tire in the full stage tire building process. The first and second shoulder seal 60a, 60b are located on the axially outer ends of the segments 22a, 22b forming the center section. Each center seal preferably has an overall annular shape, having a first end 62a, 62b which is secured in seal clamps (not shown) located adjacent the center section segments. Preferably the first ends 62a, 62b of the seal have an outer bead projection 63 for mating reception with inner protrusion of the seal clamp. The shoulder seals each further comprise a second end 64a, 64b that is a free or unconstrained end. Thus the shoulder seals are not subject to axial tension which substantially reduced the life of the center sleeve. The free end 64a, 64b rests on the outer surface 23a, 23b (Fig. 6) of the center segments 22a, 23b, and will slide relative to the center segments when the drum is radially expanded. The outer surface 23a, 23b has a smaller outer diameter than the center of the center section, forming a radial step so that when the shoulder seals are mounted, the shoulder seals form a flush surface with the center section of the drum.

The shoulder seal is preferably molded into an L shape as shown in Figure 4. The shoulder seal may be made of rubber or polyurethane or other flexible polymers.

### Bead Locked Mechanism

Adjacent the center section 20 are first and second annular bead locking mechanisms 25. Figure 2 illustrates the bead locking mechanisms 25 in the retracted position.

### Shoulder Section and Shoulder Clamp Lock

The right and left hand shoulder section 29 of the tire building drum 5 is defined as the drum components located axially outward of the centerline of the center section, inclusive of the seal clamps and the bead lock mechanisms. The left and right hand shoulder sections of the tire building drum are axially slidable on bearing sleeves. The shoulder sections 29 are actuated by drive pins 125 mounted on nuts 130, which ride along drive screw 121. When the central screw is rotated, the nuts 130 move axially inward/outward, causing the drive pins 125 and each shoulder section to move axially inward/outward in corresponding fashion. In addition, the drive pins are also in mechanical cooperation with the split center segments, causing the split center segments 22a, 22b to axially extend or contract.

### Drive Shaft

A central drive shaft is provided for rotational movement of the tire building drum 5 about its longitudinal axis. The central shaft is connected to a drive means (not shown). Provided within the central drive shaft is a central screw 121. The central screw 121 is supported at each end by bearings. The threads on one side of the central screw 121 are left handed and on the opposite side are right handed. On the left hand side is an inboard nut connected to the one end of the threaded screw 121 and similarly on the opposite right hand side is an outboard ball nut connected to the central screw 121.

### Turn Up Bladders

An upper bladder extends axially outward from the bead lock mechanism 25 to the respective ends of the tire building drum. The upper bladder extends over a lower bladder, which is mounted in the shoulder area of the drum and extends axially outward to the respective ends of the tire building drum. The upper and lower bladders function as turnup bladders which are used to inflate and, thereby, make the turn-up ends of the ply wrap about the apex and bead cores.

## Claims

1. A tire building drum comprising: a rotatable drum (5) having a center section (20) and a first and second shoulder section (29), said center section (20) being radially expandable, wherein said center section has no center sleeve, wherein said center section has a first and second end (62a, 62b), wherein the first and second end (62a, 62b) each have a shoulder, wherein the center section (20) further comprises a first and second shoulder seal (60a, 60b) having a first end (62a, 62b) received in a clamp and a second free end (64a, 64b) slidable on the first and second end of the center section (20) so that the shoulder seal extends over the shoulder of the center section (20).

2. The tire building drum of claim 1 wherein said center section has segments comprising a first half and a second half, wherein the first half is slidably mounted within the second half.

3. The tire building drum of claim 2 wherein the first half and the second half are each formed from one or more mounting blocks (40a, 40b), wherein each mounting block (40a, 40b) has a recess (42a, 42B) for receiving one or more rods (24a, 24b).

4. The tire building drum of claim 3 wherein the rods (24a, 24b) are removably secured to the mounting blocks (40a, 40b).

5. The tire building drum of claim 3 or 4 wherein each mounting block (40a, 40b) has at least three rods separated by a recess, wherein the rods of the first half are aligned for reception into recesses of the second half.

6. The tire building drum of claim 3, 4 or 5 wherein at least one rod has a plurality of holes (80).

7. The tire building drum of at least one of the claims 3 to 6 wherein the mounting blocks have a radial height and are interchangeable with mounting blocks having a different radial height.

## Patentansprüche

1. Reifenbautrommel, umfassend: eine rotierbare Trommel (5) mit einem mittleren Abschnitt (20) und einem ersten und einem zweiten Schulterabschnitt (29), wobei der mittlere Abschnitt (20) radial ausdehnbar ist, wobei der mittlere Abschnitt keine zentrale Manschette aufweist, wobei der mittlere Abschnitt ein erstes und ein zweites Ende (62a, 62b) aufweist, wobei das erste und das zweite Ende (62a, 62b) jedes eine Schulter aufweisen, wobei der mittlere Abschnitt (20) weiter eine erste und eine zweite Schulterdichtung (60a, 60b) umfasst, wovon ein erstes Ende (62a, 62b) in eine Klammer aufgenommen ist und ein zweites freies Ende (64a, 64b) auf dem ersten und zweiten Ende des mittleren Abschnitts (20) verschiebbar ist, sodass die Schulterdichtung sich über die Schulter des mittleren Abschnitts (20) erstreckt.

2. Reifenbautrommel nach Anspruch 1, wobei der mittlere Abschnitt Segmente aufweist, die eine erste Hälfte und eine zweite Hälfte umfassen, wobei die erste Hälfte verschieblich in der zweiten Hälfte montiert ist.

3. Reifenbautrommel nach Anspruch 2, wobei die erste Hälfte und die zweite Hälfte jede aus einem oder mehreren Montageblöcken (40a, 40b) gebildet sind, wobei jeder Montageblock (40a, 40b) eine Ausnehmung (42a, 42B) zur Aufnahme eines oder mehrerer Stäbe (24a, 24b) aufweist.

4. Reifenbautrommel nach Anspruch 3, wobei die Stäbe (24a, 24b) abnehmbar an den Montageblöcken (40a, 40b) gesichert sind.

5. Reifenbautrommel nach Anspruch 3 oder 4, wobei jeder Montageblock (40a, 40b) mindestens drei Stäbe, die durch eine Ausnehmung getrennt sind, aufweist, wobei die Stäbe der ersten Hälfte zur Aufnahme in Ausnehmungen der zweiten Hälfte ausgerichtet sind.

6. Reifenbautrommel nach Anspruch 3, 4 oder 5, wobei mindestens ein Stab eine Vielzahl von Löchern (80) aufweist.

7. Reifenbautrommel nach mindestens einem der Ansprüche 3 bis 6, wobei die Montageblöcke eine radiale Höhe aufweisen und gegen Montageblöcke mit einer anderen radialen Höhe austauschbar sind.

## Revendications

1. Tambour de confection de bandage pneumatique comprenant : un tambour rotatif (5) possédant une section centrale (20) et une première et une deuxième section d'épaulement (29), ladite section centrale (20) étant extensible en direction radiale, dans lequel ladite section centrale ne possède pas de manchon central, dans lequel ladite section centrale possède une première et une deuxième extrémité (62a, 62b), dans lequel la première et la deuxième extrémité (62a, 62b) possèdent chacune un épaulement, dans lequel la section centrale (20) comprend en outre un premier et un deuxième joint d'épaulement (60a, 60b) possédant une première extrémité (62a, 62b) qui vient se loger dans une pince et une deuxième extrémité libre (64a, 64b) apte à coulisser sur la première et la deuxième extrémité de la section centrale (20), si bien que le joint d'épaulement s'étend par-dessus l'épaulement de la section centrale (20).

2. Tambour de confection de bandage pneumatique selon la revendication 1, dans lequel ladite section centrale possède des segments comprenant une première moitié et une deuxième moitié, la première moitié étant montée en coulissement au sein de la deuxième moitié.

3. Tambour de confection de bandage pneumatique selon la revendication 2, dans lequel la première moitié et la deuxième moitié sont chacune constituées par un ou plusieurs blocs de montage (40a, 40b), dans lequel chaque bloc de montage (40a, 40b) possède un évidement (42a, 42b) pour recevoir une ou plusieurs tiges (24a, 24b).

4. Tambour de confection de bandage pneumatique selon la revendication 3, dans lequel les tiges (24a, 24b) sont fixées de manière amovible aux blocs de montage (40a, 40b).

5. Tambour de confection de bandage pneumatique selon la revendication 3 ou 4, dans lequel chaque bloc de montage (40a, 40b) possède au moins trois tiges séparées par un évidement, les tiges de la première moitié étant alignées à des fins de réception dans des évidements de la deuxième moitié.

6. Tambour de confection de bandage pneumatique selon la revendication 3, 4 ou 5, dans lequel au moins une tige possède plusieurs trous (80).

7. Tambour de confection de bandage pneumatique selon au moins une des revendications 3 à 6, dans lequel les blocs de montage possèdent une hauteur radiale et peuvent être échangés avec des blocs de montage possédant une hauteur radiale différente.
